# EUROPÄISCHE PATENTSCHRIFT

(11) **EP 2 335 017 B1**
(45) Veröffentlichungstag und Bekanntmachung des Hinweises auf die Patenterteilung: **12.08.2015**
(21) Anmeldenummer: 09782222.5
(22) Anmeldetag: 26.08.2009
(51) Int. Cl.: G01B 11/27, G01D 18/00, G01S 7/497

(54) **VERFAHREN ZUM JUSTIEREN ODER KALIBRIEREN EINES FAHRZEUGUMFELDSENSORS SOWIE FAHRZEUGUMFELDSENSOR-JUSTIER- ODER KALIBRIER-ANORDNUNG**
METHOD FOR ADJUSTING OR CALIBRATING A VEHICLE SURROUNDINGS SENSOR AND A VEHICLE SURROUNDINGS SENSOR ADJUSTMENT OR CALIBRATION APPARATUS
PROCÉDÉ POUR RÉGLER OU ÉTALONNER UN DÉTECTEUR D'ENVIRONNEMENT POUR VÉHICULE, ET AGENCEMENT DE RÉGLAGE OU D'ÉTALONNAGE DE DÉTECTEUR D'ENVIRONNEMENT POUR VÉHICULE

(30) Priorität: 12.09.2008 DE 102008042018
(43) Veröffentlichungstag der Anmeldung: 22.06.2011
(73) Patentinhaber: Robert Bosch GmbH, 70442 Stuttgart (DE)
(72) Erfinder: SCHOMMER, Stefan, 85716 Unterschleissheim (DE); MACCHIA, Adriano, 80798 Muenchen (DE); WAGMANN, Christian, 80797 Muenchen (DE); BACKES, Jochen, 80687 Muenchen (DE); KAEFER, Stefan Markus, 85609 Aschheim (DE)
(86) Internationale Anmeldenummer: PCT/EP2009/061006
(87) Internationale Veröffentlichungsnummer: WO 2010/028952

(56) Entgegenhaltungen:
- WO-A1-2004/027347
- US-A1- 2005 041 847

## Beschreibung

Die vorliegende Erfindung betrifft ein Verfahren zum Justieren oder Kalibrieren eines Fahrzeugumfeldsensors, sowie eine Fahrzeugumfeldsensor-Justier- oder Kalibrier-Anordnung.

In immer mehr Kraftfahrzeugen finden heutzutage sogenannte Fahrassistenzsysteme ihren Einsatz, die das Fahrzeugumfeld überwachen und dem Fahrer entsprechende Informationen liefern. Manche Systeme greifen sogar aktiv in den Fahrbetrieb ein und bremsen das Fahrzeug selbstständig ab oder beschleunigen es. Andere Systeme überwachen bspw. die Fahrzeugposition im Verhältnis zur Fahrbahn unter Heranziehung der Fahrbahnmarkierungen. Sobald sich das Fahrzeug dem Fahrbahnrand nähert, kann dies dem Fahrer akustisch und/oder visuell mitgeteilt werden.

Diese Fahrassistenzsysteme müssen zumindest zur Fahrachse des Kraftfahrzeugs ausgerichtet sein. Sie müssen daher in bestimmten zeitlichen Abständen kalibriert oder justiert werden. Eine derartige Kalibrierung oder Justierung der Fahrassistenzsysteme gestaltet sich sehr aufwändig und ist mit hohen Zusatzkosten für die hierfür erforderliche Ausrüstung verbunden.

Die Dokumente US2005/0041847 und EP1260832 zeigen eine Kalibrierung oder Justierung von Fahrassistenzsystemen. Dabei werden Targets verwendet, die an den Rädern befestigt sind, sowie mehrere Messeinheiten, die an einem Gestell vor dem Fahrzeug angebracht sind.

Es ist daher eine Aufgabe der vorliegenden Erfindung, eine Fahrzeugumfeld-Justier- oder Kalibrier-Anordnung sowie ein entsprechendes Verfahren zum Justieren oder Kalibrieren eines Fahrzeugumfeldsensors anzugeben, mit denen eine derartige Kalibrierung oder Justierung auf einfache und kostengünstige Weise durchgeführt werden kann.

Diese Aufgabe wird durch den Gegenstand der unabhängigen Patentansprüche gelöst. Vorteilhafte Weiterbildungen ergeben sich aus den abhängigen Ansprüchen.

Mit dem erfindungsgemäßen Verfahren zum Justieren oder Kalibrieren eines Fahrzeugumfeldsensors nach dem unabhängigen Verfahrenanspruch und mit der Fahrzeugumfeldsensor-Justier- oder Kalibrier-Anordnung nach den unabhängigen Vorrichtungsanspruch werden die Targets und die Messeinheiten der Fahrwerksvermessungseinrichtung für die Ermittlung der Position des Fahrzeugumfeldsensor-Justier- oder Kalibierelements und damit des Fahrzeugumfeldsensors zu der Fahrachse verwendet, und basierend darauf kann der Fahrzeugumfeldsensor justiert oder kalibriert werden.

Die Fahrachse ist durch die Stellung der Räder der Hinterachse bestimmt, die von der Fahrzeuglängsmittelebene abweichen kann.

Erfindungsgemäß können zum Justieren oder Kalibrieren des Fahrzeugumfeldsensors gängige Targets zum Einsatz kommen. Dabei wird unter Justieren das Einstellen des Fahrzeugumfeldsensors selbst und unter Kalibrieren die rechnerische Kompensation der durch den Fahrzeugumfeldsensor ermittelten Messwerte verstanden.

Das erfindungsgemäße Justieren oder Kalibrieren eines Fahrzeugumfeldsensors ist einfach durchführbar, und es können auch unbekannte Targets, also Targets ohne eine bekannte Passpunktanordnung verwendet werden.

Erfindungsgemäß können alle am oder im Fahrzeug angeordneten Fahrzeugumfeldsensoren justiert oder kalibriert werden. Die erfindungsgemäß zu justierenden oder zu kalibrierenden Fahrzeugumfeldsensoren können bspw. optische, radarbasierte oder ultraschallbasierte Fahrzeugumfeldsensoren sein.

Das erfindungsgemäße Verfahren zum Justieren oder Kalibrieren eines Fahrzeugumfeldsensors sowie die erfindungsgemäße Fahrzeugumfeldsensor-Justier- oder Kalibrier-Anordnung benötigen keine zusätzlichen Messelemente und insbesondere keine Elektronik an der Justage- bzw. Kalibriervorrichtung, was zu einer beträchtlichen Kostenersparnis führt.

Gegenüber Fahrwerksvermessungseinrichtungen mit CCD-Technologie ergeben sich die weiteren Vorteile, dass zusätzliche Elektronik an der Justage- oder Kalibriervorrichtung und damit verbundene Verkabelung eingespart werden kann, dass eine Überprüfung der Fahrzeugumfeldsensoren auch über längere Entfernungen möglich ist, und dass dementsprechend die Einschränkung, dass nur kurze Distanzen zwischen den Messelementen am Kraftfahrzeug und den Messelementen an der Justage- oder Kalibriervorrichtung möglich sind, entfällt.

Gegenüber 3D-Fahrwerksvermessungseinrichtungen, die vor dem Messplatz fest installiert sind, ergeben sich die Vorteile, dass keine zusätzlichen Kameras an der Justage- oder Kalibriervorrichtung erforderlich sind und dass der Abstand zwischen der Justage- oder Kalibriervorrichtung und dem Kraftfahrzeug nicht manuell, bspw. mittels eines Maßbands ermittelt werden muss.

Zusammenfassend ist daher festzustellen, dass das erfindungsgemäße Verfahren zum Justieren oder Kalibrieren eines Fahrzeugumfeldsensors einfach durchführbar ist und dass die erfindungsgemäße Justier- oder Kalibrier-Anordnung einfach bedienbar und dabei kostengünstig ist.

Gemäß einer vorteilhaften Ausführungsform, bei welcher zusätzlich der Abstand des Fahrzeugumfeldsensor-Justier- oder Kalibierelements zur Vorderachse bestimmt wird, wird eine dynamische Abstandsmessung ermöglicht, und eine manuelle Abstandsmessung zwischen der Justage- bzw. Kalibriervorrichtung und dem Kraftfahrzeug, wie sie oft bei Fahrwerksvermessungseinrichtungen mit CCD-Technologie, bei denen herkömmliche Einheiten mit Spanneinheiten am Fahrzeugrad adaptiert werden, durchgeführt werden muss, entfällt.

Die vorteilhaften Weiterbildungen der Fahrzeugumfeldsensor-Justier- oder Kalibrier-Anordnung gemäß den abhängigen Ansprüchen und die sich dabei ergebenden weiteren Vorteile, wie sie nachfolgend beschrieben sind, ergeben sich in gleicher Weise für das erfindungsgemäße Verfahren zum Justieren oder Kalibrieren eines Fahrzeugumfeldsensors, und diese sind ausdrücklich als mit offenbart anzusehen. Zur Vermeidung von Wiederholungen werden diese verfahrensmäßig formulierten Weiterbildungen und die damit verbundenen Vorteile nicht wiederholt.

Die vorliegende Erfindung ist nachfolgend anhand von Ausführungsbeispielen mit Bezug auf die beiliegenden Figuren 1 bis 3 näher erläutert.
- Figur 1: zeigt eine Prinzipskizze einer ersten Fahrzeugumfeldsensor-Justier- oder Kalibrier-Anordnung gemäß einem Ausführungsbeispiel der Erfindung;
- Figur 2: zeigt eine zweite Fahrzeugumfeldsensor- Justier- oder Kalibrier-Anordnung gemäß einem zweiten Ausführungsbeispiel der Erfindung; und
- Figur 3: zeigt eine Prinzipskizze einer dritten Fahrzeugumfeldsensor-Justier- oder Kalibrier-Anordnung gemäß einem dritten Ausführungsbeispiel der Erfindung.

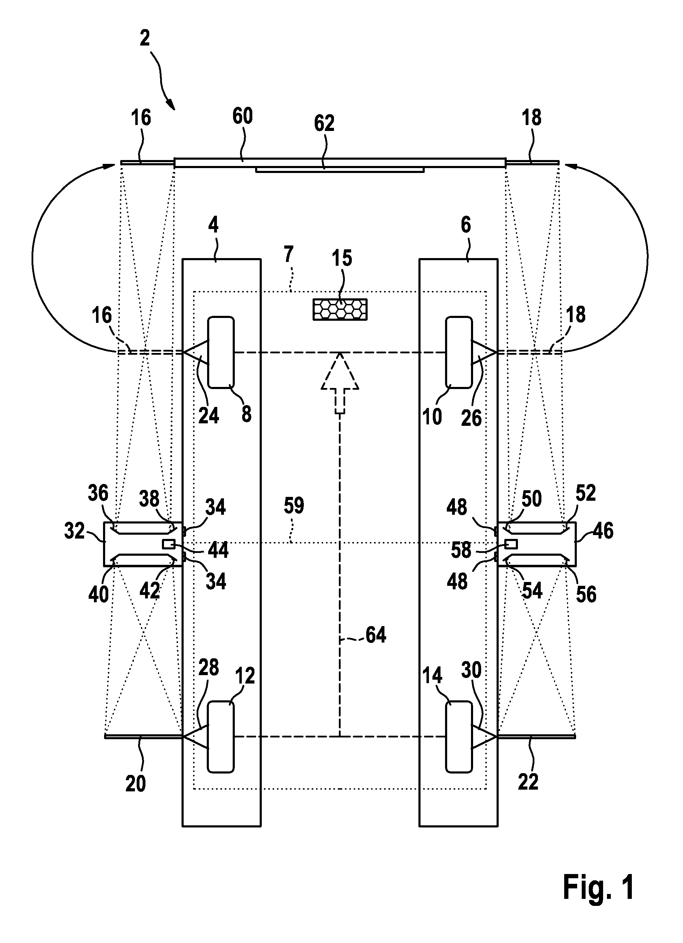

Figur 1 zeigt eine Prinzipskizze einer ersten Fahrzeugumfeldsensor-Justier- oder Kalibrier-Anordnung 2.

Die erste Fahrzeugumfeldsensor-Justier- oder Kalibrier-Anordnung 2 umfasst ein auf den Fahrschienen 4 und 6 eines Messplatzes stehendes Kraftfahrzeug 7 mit einer Fahrwerksvermessungseinrichtung. Zur Vereinfachung der Darstellung sind nur die Räder 8, 10, 12 und 14 des Kraftfahrzeugs 7 gezeigt, und die Abmessungen der Karosserie des Fahrzeugs 7 nur durch einen gestrichelt gezeichneten Umriss angedeutet. Die Vorder- und die Hinterachse des Kraftfahrzeugs 7 sind durch gestrichelte Querlinien dargestellt. Die geometrische Fahrachse 64 ist als gestrichelter Pfeil, der von dem Mittelpunkt der Hinterachse zu dem Mittelpunkt der Vorderachse verläuft, dargestellt. Das Kraftfahrzeug weist in etwa mittiger Position seiner Vorderseite einen Fahrzeugumfeldsensor 15 auf, der mittels der ersten Fahrzeugumfeldsensor-Justier- oder Kalibrier-Anordnung 2 justiert oder kalibriert werden soll.

Die Fahrwerksvermessungseinrichtung umfasst Targets 16, 18, 20 und 22, die mittels Schnellspanneinheiten 24, 26, 28 und 30 an den Rädern 8, 10, 12 und 14 des Kraftfahrzeugs 7 befestigt sind, sowie eine linke Messeinheit 32 und rechte Messeinheit 46, die an den Fahrschienen 4 und 6 mittels Befestigungsadaptern 34 und 48 etwa in mittlerer Position bezogen auf die Längserstreckung der Fahrschienen 4 und 6 befestigt sind und sich von diesen nach außen erstrecken. Die Targets 16 bis 22 sind scheibenförmig ausgebildet und nach außen gerichtet. Die Haupterstreckungsrichtung der Targets 16 bis 22 kann in einer senkrechten Ebene durch die Drehachse der Räder 8 und 10 sowie 12 und 14 verlaufen, wie dies in Figur 1 exemplarisch dargestellt ist.

Die linke Messeinheit 32 verfügt über eine äußere nach vorn gerichtete Messkamera 36, über eine innere nach vorn gerichtete Messkamera 38, über eine äußere nach hinten gerichtete Messkamera 40 und über eine innere nach hinten gerichtete Messkamera 42. In entsprechender Weise umfasst die rechte Messeinheit 46 eine innere nach vorn gerichtete Messkamera 50, eine äußere nach vorne gerichtete Messkamera 52, eine innere nach hinten gerichtete Messkamera 54 und eine äußere nach hinten gerichtete Messkamera 56. Das Blickfeld der nach hinten gerichteten Messkameras 40 und 42 der linken Messeinheit 32 und das Blickfeld der nach hinten gerichteten Messkameras 54 und 56 ist jeweils so bemessen, dass das hintere linke Target 20 und das rechte hintere Target 22 vollständig darin liegen.

Bei den in der Figur 1 gezeigten Messeinheiten 32 und 46 handelt es sich um mobile Messeinheiten, die mittels Befestigungsadaptern 34 und 52 an den Fahrschienen 4 und 6 eingehängt oder mit den Fahrschienen 4 und 6 verschraubt sind. Ebenso ist eine Magnetadaption möglich. Prinzipiell können die Messeinheiten 32 und 46 auf jede geeignete Weise mit den Fahrschienen 4 und 6 verbunden werden. Das Vorsehen von lösbaren Verbindungen bietet den Vorteil, dass die Messeinheiten 32 und 46 leicht abgenommen und auch an anderen Arbeitsplätzen eingesetzt werden können.

Die Messeinheiten 32 und 46 verfügen über eine Quer-Referenzierung, die in der Figur durch Quer-Referenzkameras 44 und 58 ausgeführt ist, die in Fahrzeug-Querrichtung ausgerichtet sind und optische Merkmale auf den jeweils gegenüber liegenden Fahrschienen oder Messeinheiten 32 und 46 erfassen, um so die Position der Messeinheiten 32 und 46 zueinander zu ermitteln. Beispielsweise können diese optischen Merkmale als LED's auf den einander gegenüberliegenden Quer-Referenzkameras 44 und 58 ausgebildet sein. Die Quer-Referenzkameras 44 und 58 sind dabei so oberhalb oder unterhalb der Fahrschienen 4 und 6, jedoch auf jeden Fall unterhalb des Bodens des Kraftfahrzeugs 7 angeordnet, dass eine ungehinderte Quer-Sichtverbindung besteht.

Des Weiteren können die Messeinheiten 32 und 46 noch über hier nicht gezeigte Neigungsgeber verfügen, mittels derer sich die Verkippung der Messeinheiten 32 und 46 bestimmen lässt. Die Sichtverbindung zur Quer-Referenzierung zwischen den Quer-Referenzkameras 44 und 58 ist in Figur 1 durch eine gepunktete Querlinie dargestellt.

Die Targets 16 und 18 sind an den Vorderrädern 8 und 10 nur gestrichelt dargestellt.

Vor dem Messplatz ist ein Gestell 60 angeordnet, das in Fahrzeugquerrichtung ausgerichtet ist und sich von einer Breitenposition links der linken Fahrschiene 4 bis zu einer Breitenposition rechts der rechten Fahrschiene 6 erstreckt. An den seitlichen Enden des Gestells 60 sind in Figur 1 nicht gezeigte Aufnahmen für daran anzubringende Targets angeordnet, in welche die Targets 16 und 18 der Vorderräder 8 und 10 eingesteckt werden können.

Mittels zweier Pfeile ist in Figur 1 visualisiert, wie die Targets 16 und 18 der Vorderräder 8 und 10 von diesen entfernt und an den seitlichen Aufnahmen des Gestells 60 angebracht werden.

An der nach hinten gerichteten Seite des Gestells 60 ist ein Fahrzeugumfeldsensor-Justier- oder Kalibrier-Target 62 angeordnet, das sich in etwa von einer Breitenposition, die dem rechten Ende der linken Fahrschiene 4 entspricht, bis zu einer Breitenposition, die dem linken Ende der rechten Fahrschiene 6 entspricht, erstreckt.

Die Brennweite der nach vorne gerichteten Messkameras 36 und 38 der linken Messeinheit 32 und die Brennweite der nach vorne gerichteten Messkameras 50 und 52 der rechten Messeinheit 46 können jeweils so verändert werden, dass die an den Vorderrädern 8 und 10 angebrachten Targets 16 und 18 vollständig in deren Blickfeld liegen und dass die an den seitlichen Aufnahmen des Gestells 60 angeordneten Targets 16 und 18 vollständig in deren Blickfeld liegen, wie dies in Figur 1 durch gepunktete Linien dargestellt ist.

Die Fahrzeugumfeldsensor-Justier- oder Kalibrier-Anordnungen der Figuren 1 bis 3 verfügen des weiteren noch über eine nicht gezeigte Datenverarbeitungseinheit bzw. Auswerteeinheit, welche die Signale der Messkameras, ggf. der Referenzkameras und des Fahrzeugumfeldsensors erhalten und aus diesen Signalen die relevanten Fahrwerksparameter bestimmen.

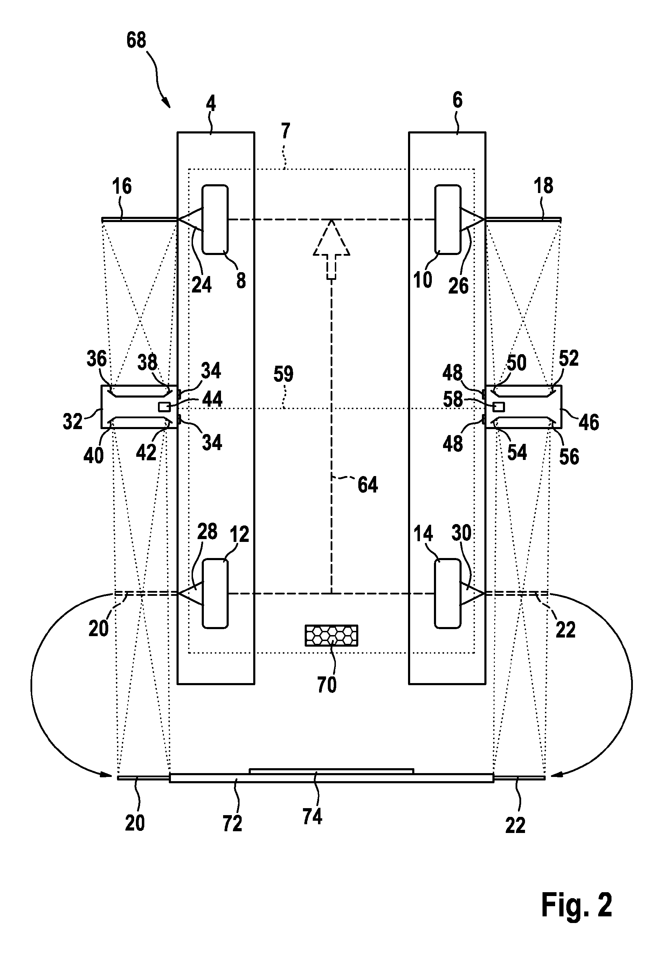

Figur 2 zeigt eine zweite Fahrzeugumfeldsensor- Justier- oder Kalibrier-Anordnung 68.

Die zweite Fahrzeugumfeldsensor-Justier- oder Kalibrier-Anordnung 68 unterscheidet sich von der ersten Fahrzeugumfeldsensor-Justier- oder Kalibrier-Anordnung 2 dadurch, dass der Fahrzeugumfeldsensor mittig am Heck des Kraftfahrzeugs 7 angeordnet ist, dass das Gestell 72 mit dem nach vorne gerichteten Fahrzeugumfeldsensor-Justier- oder Kalibrier-Target 74 hinter dem Fahrzeug 7 angeordnet ist und dass die hinteren Targets 20 und 22 von der gestrichelt dargestellten Position an den Hinterrädern 12 und 14 zu der Position an den seitlichen Aufnahmen des Gestells 72 gebracht werden.

Dementsprechend sind die Blickfelder der nach vorne gerichteten Kameras 36 und 38 der linken Messeinheit 32 und der nach vorne gerichteten Kameras 50 und 52 der rechten Messeinheit 46 so bemessen, dass jeweils die vorderen Targets 16 und 18 vollständig darin liegen. Die Brennweiten der nach hinten gerichteten Kameras 40 und 42 der linken Messeinheit 32 und der nach hinten gerichteten Kameras 54 und 56 der rechten Messeinheit 46 können so eingestellt werden, dass die hinteren Targets 20 und 22 vollständig in dem Blickfeld dieser Kameras 40, 42, 54 und 56 liegen, wenn sie an den Hinterrädern 12 und 14 angebracht sind und wenn sie an den seitlichen Aufnahmen des Gestells 72 befestigt sind.

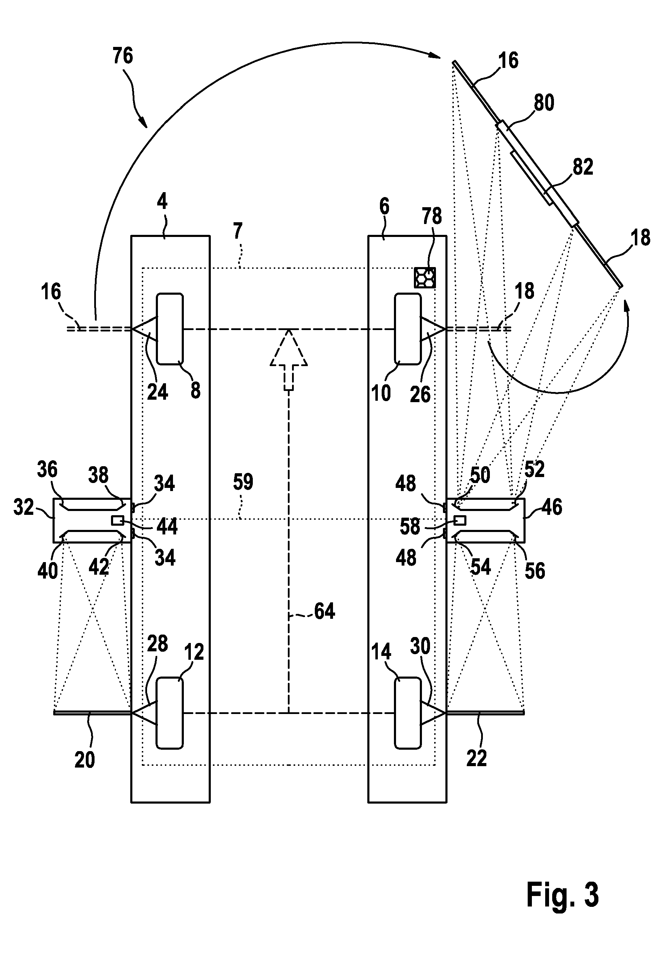

Figur 3 zeigt eine Prinzipskizze einer dritten Fahrzeugumfeldsensor-Justier- oder Kalibrier-Anordnung 76.

Die dritte Fahrzeugumfeldsensor-Justier- oder Kalibrier-Anordnung 76 unterscheidet sich von der ersten Fahrzeugumfeldsensor-Justier- oder Kalibrier-Anordnung 2 dadurch, dass der Fahrzeugumfeldsensor 78 in einem vorderen rechten Eckbereich des Fahrzeugs 7 platziert ist, dass das Gestell 80 sowie das an dessen Vorderseite angeordnete Fahrzeugumfeldsensor-Justier- oder Kalibrier-Target 82 etwas schmaler als in Figur 1 ausgeführt ist, und dass das Gestell 80 und das Target 82 in einer Position rechts vor dem Kraftfahrzeug 7 mit einer schrägen Ausrichtung angeordnet sind.

Das Wechseln der Positionen der vorderen Targets 16 und 18 zwischen den Vorderrädern 8 und 10 und den seitlichen Aufnahmen des Gestells 80 ist in Figur 3 ebenfalls durch Pfeile angedeutet. Zwischen den nach vorne gerichteten Kameras 36 und 38 der linken Messeinheit 32 und dem an der linken Aufnahme des Gestells 80 angeordneten vorderen linken Target 16 besteht aufgrund des dazwischen befindlichen Kraftfahrzeugs 7 keine Sichtverbindung. Dafür liegen beide an dem Gestell 80 platzierten Targets 16 und 18 im Blickfeld der nach vorne gerichteten Kameras 50 und 52 der rechten Messeinheit 46. Hierfür können die Brennweite und das Blickfeld der Kameras 50 und 52 so verändert werden, dass das an dem rechten Vorderrad 10 angeordnete vordere rechte Target 18 vollständig in deren Blickfeld liegt und dass die an den seitlichen Aufnahmen des Gestells 80 angeordneten Targets 16 und 18 vollständig in deren Blickfeldern liegen.

Das Verfahren zum Justieren oder Kalibrieren des Fahrzeugumfeldsensors 15 des Kraftfahrzeugs 7 wird nachfolgend im Einzelnen erläutert:
Zunächst werden mittels der Spanneinheiten 24 bis 30 die Targets 16 und 18 an den Vorderrädern 8 und 10 und die Targets 20 und 22 an den Hinterrädern 12 und 14 des Kraftfahrzeugs 7 befestigt, wobei es in der einfachsten Ausführungsform ausreicht, lediglich die Targets 20 und 22 an den Hinterrädern 12 und 14 des Kraftfahrzeugs 7 anzubringen, weil sich daraus schon sehr genau die geometrische Fahrachse des Kraftfahrzeugs 7 bestimmen lässt.

Dann werden die Messeinheiten 32 und 46 mittels der Befestigungsadapter 34 und 48 an den Fahrschienen 4 und 6 befestigt, sofern sie dort nicht ohnehin schon angeordnet sind.

Nun werden die Targets 16 und 18 durch die nach vorne gerichteten Messkameras 34, 36 sowie 50 und 52 aufgenommen, und ebenso werden die hinteren Targets 20 und 22 durch die nach hinten gerichteten Messkameras 40, 42 sowie 54, 56 aufgenommen. Dann erfolgt eine Drehung der Targets 16, 18, 20 und 22 in eine zweite Targetposition, entweder durch Verschieben des Kraftfahrzeugs auf den Fahrschienen 4 und 6 oder durch Drehen der Targets 16 bis 22 gegenüber dem ortsfest verbleibenden Rädern 8 bis 14. Nun werden die Targets 16 bis 22 durch die Messkameras 36 bis 42 und 50 bis 56 erneut aufgenommen. Aus diesen Abbildern der Targets 16 bis 22 kann nun die Datenverarbeitungseinheit die Fahrachse 64 bestimmen, wobei hierfür, wie schon vorher erwähnt, eine Betrachtung der Targets 20 und 22 an den Hinterrädern 12 und 14 ausreicht.

Anschließend werden die vorderen Targets 16 und 18 von den Vorderrädern 8 und 10 entfernt und an den seitlichen Aufnahmen des Gestells 60 angeordnet. Dann werden die Targets 16 und 18 an dem Gestell 60 durch die nach vorne gerichteten Kameras 36 und 38 sowie 50 und 52 erneut aufgenommen, die Targets 16 und 18 werden dann an dem Gestell gedreht, und es erfolgt eine erneute Bildaufnahme dieser Targets 16 und 18 durch die Kameras 36, 38 und 50, 52 in der zweiten gedrehten Targetposition.

Die Datenverarbeitungseinheit kann nun die Winkellage des Fahrzeugumfeldsensor-Justier- oder Kalibrier-Elements 62 zu der Fahrachse 64 bestimmen.

Anschließend kann das Fahrzeugumfeldsensor-Justier- oder Kalibrier-Element 62 zu der Fahrachse 64 ausgerichtet und in einem nachfolgenden Schritt justiert oder kalibriert werden.

Wenn zusätzlich der Abstand der Targets 16 und 18 zu den Messeinheiten 32 und 46 und somit zu der Vorderachse des Kraftfahrzeugs bestimmt wird, kann die Datenverarbeitungseinheit zusätzlich die Position des Fahrzeugumfeldsensor-Justier- oder Kalibrier-Elements 62 zu der Fahrachse 64 des Kraftfahrzeugs 7 bestimmen, und zwar anhand der bestimmten Fahrachse 64, anhand des bestimmten Abstands der Targets 16 und 18 zu dem Kraftfahrzeug 7 und anhand der bestimmten Winkellage des Fahrzeugumfeldsensor-Justier- oder Kalibrier-Elements 62 zu der Fahrachse 64.

Das Verfahren zum Justieren oder Kalibrieren des Fahrzeugumfeldsensors 70 der zweiten Fahrzeugumfeldsensor-Justier- oder Kalibrier-Anordnung 68 läuft analog ab, mit dem Unterschied, dass hier die hinteren Targets 20 und 22 von den Hinterrädern 12 und 14 entfernt und an den seitlichen Aufnahmen des hinter dem Kraftfahrzeug 7 angeordneten Gestells 72 angebracht werden, und dass diese Targets 20 und 22 von den nach hinten gerichteten Kameras 40 und 42 sowie 54 und 56 in zwei Targetpositionen aufgenommen werden.

Das Verfahren zum Justieren oder Kalibrieren des Fahrzeugumfeldsensors 78 läuft ebenfalls analog wie bei dem Verfahren zum Justieren oder Kalibrieren des Fahrzeugumfeldsensors 15 der ersten Fahrzeugumfeldsensor-Justier- oder Kalibrier-Anordnung 2 ab, wobei hier die an den seitlichen Aufnahmen des Gestells 80 angeordneten Targets 16 und 18 jeweils von den nach vorne gerichteten Messkameras 50 und 52 der rechten Messeinheit 46 in zwei Targetpositionen aufgenommen werden.

## Patentansprüche

1. Verfahren zum Justieren oder Kalibrieren eines Fahrzeugumfeldsensors (15), aufweisend die folgenden Schritte:
Platzieren eines Kraftfahrzeugs (7) auf den Fahrschienen (4, 6) eines Messplatzes;
Anbringen zumindest eines Targetpaars (20, 22) an den Hinterrädern (12, 14) des Kraftfahrzeugs (7);
Befestigen von zwei Messeinheiten (32, 46), einer auf jeder Seite des Kraftfahrzeugs (7), an jeweils einer der Fahrschienen (4, 6) in Bezug auf die Längserstreckung der Fahrschienen (4, 6) zwischen den Vorderrädern (8, 10) und den Hinterrädern (12, 14) des Kraftfahrzeugs (7), wobei jede der Messeinheiten (32, 46) jeweils über zwei nach vorne gerichtete Messkameras (36, 38, 50, 52), zwei nach hinten gerichtete Messkameras (40, 42, 54, 46) und eine Quer-Referenzkamera (44, 58), die in Fahrzeug-Querrichtung ausgerichtet und ausgebildet ist, optische Merkmale auf der jeweils gegenüberliegenden Messeinheit (32, 34) und/oder Fahrschiene (4, 6) zu erfassen, verfügt;
Bestimmen der Position der Messeinheiten (32, 34) zueinander mittels der Quer-Referenzkameras (44, 58);
Aufnehmen des Targetpaars (20, 22) durch wenigstens eine Messeinheit (32, 46) und Bestimmen der Fahrachse (64) daraus;
Platzieren wenigstens eines Targets (16, 18) in einer bekannten Position zu einem Fahrzeugumfeldsensor-Justier- oder Kalibierelement (62);
Aufnehmen des an dem Fahrzeugumfeldsensor-Justier- oder Kalibierelement (62) platzierten Targets (18) durch die wenigstens eine Messeinheit (32, 46) und Bestimmen der Winkellage des Fahrzeugumfeldsensor-Justier- oder Kalibierelements (62) zur Fahrachse (64);
Ausrichten des Fahrzeugumfeldsensor-Justier- oder Kalibierelements (62) zur Fahrachse (64); und
Justieren oder Kalibrieren des Fahrzeugumfeldsensors (15) zur Fahrachse (64).

2. Verfahren nach Anspruch 1, weiterhin umfassend die Schritte des Anbringens eines Targetpaars (16, 18) an den Vorderrädern (8, 10) des Kraftfahrzeugs (7), des Aufnehmens der Targetpaare (16, 18; 20, 22) an den Vorderrädern (8, 10) und an den Hinterrädern (12, 14) durch wenigstens eine Messeinheit (32, 46) und des Bestimmens der Fahrachse (64) daraus.

3. Verfahren nach Anspruch 1 oder 2, weiterhin umfassend den Schritt des Bestimmens des Abstands des Fahrzeugumfeldsensor-Justier- oder Kalibierelements (62) zur Vorderachse.

4. Fahrzeugumfeldsensor-Justier- oder Kalibrier-Anordnung, aufweisend:
zwei Fahrschienen (4, 6) zur Aufnahme eines Kraftfahrzeugs (7);
ein Targetpaar (20, 22) eingerichtet zum Anbringen an den Hinterrädern (12, 14) des Kraftfahrzeugs (7);
einen Fahrzeugumfeldsensor (15);
ein Fahrzeugumfeldsensor-Justier- oder Kalibierelement (62) vor oder hinter dem Kraftfahrzeug (7);
wenigstens eine Aufnahme zum Platzieren eines Targets (16, 18) in einer bekannten Position zu dem Fahrzeugumfeldsensor-Justier- oder Kalibierelement (62);
zwei Messeinheiten (32, 46) zur Erfassung der Targets (16, 18; 20, 22), wobei jede der Messeinheiten (32, 46) auf jeweils einer Seite des Kraftfahrzeugs (7) in Bezug auf die Längserstreckung der Fahrschienen (4, 6) zwischen den Vorderrädern (8, 10) und den Hinterrädern (12, 14) des Kraftfahrzeugs (7) an einer der Fahrschienen (4, 6) befestigt ist und wobei jede der Messeinheiten (32, 46) jeweils verfügt
über zwei nach vorne gerichtete Messkameras (36, 38, 50, 52), zwei nach hinten gerichtete Messkameras (40, 42, 54, 46) und eine Quer-Referenzkamera (44, 58), die in Fahrzeug-Querrichtung ausgerichtet und ausgebildet ist, optische Merkmale auf der jeweils gegenüberliegenden Messeinheit (32, 34) und/oder Fahrschiene (4, 6) zu erfassen; und
eine Datenverarbeitungseinheit, die eingerichtet ist,
um aus den aufgenommenen Abbildern der Targets (20, 22) die Fahrachse (64) des Fahrzeugs (7) zu berechnen; und
um die Winkellage des Fahrzeugumfeldsensor-Justier- oder Kalibierelements (62) zur Fahrachse (64) zu bestimmen.

5. Fahrzeugumfeldsensor-Justier- oder Kalibrier-Anordnung nach Anspruch 4, wobei die Datenverarbeitungseinheit des Weiteren dazu eingerichtet ist, nach Ausrichtung des Fahrzeugumfeldsensor-Justier- oder Kalibierelements (62) zur Fahrachse (64) den Fahrzeugumfeldsensor (15) zur Fahrachse (64) zu justieren oder zu kalibrieren.

6. Fahrzeugumfeldsensor-Justier- oder Kalibrier-Anordnung nach Anspruch 4 oder 5, weiterhin umfassend ein Targetpaar (16, 18) an den Vorderrädern (8, 10) und des Kraftfahrzeugs (7).

7. Fahrzeugumfeldsensor-Justier- oder Kalibrier-Anordnung nach einem der ansprüche 4 bis 6, wobei die Datenverarbeitungseinheit des Weiteren dazu eingerichtet ist, den Abstand des Fahrzeugumfeldsensor-Justier- oder Kalibierelements (62) zur Vorderachse zu bestimmen.

8. Fahrzeugumfeldsensor-Justier- oder Kalibrier-Anordnung nach einem der Ansprüche 4 bis 7, wobei das Fahrzeugumfeldsensor-Justier- oder Kalibierelement (62) auf einem Gestell (60) vor oder hinter dem Fahrzeug (7) angeordnet ist.

9. Fahrzeugumfeldsensor-Justier- oder Kalibrier-Anordnung nach Anspruch 8, wobei das Gestell (60) wenigstens eine insbesondere seitlich angeordnete Aufnahme für ein Target (16, 18) aufweist.

10. Fahrzeugumfeldsensor-Justier- oder Kalibrier-Anordnung nach einem der Ansprüche 4 bis 9, wobei die Messeinheiten (32, 46) über eine Referenzierung zur Bestimmung der Position der Messeinheiten (32, 46) zueinander verfügen.

## Claims

1. Method for adjusting or calibrating a vehicle surroundings sensor (15), comprising the following steps:
positioning a motor vehicle (7) on the guide rails (4, 6) of a measuring station;
mounting at least one pair of targets (20, 22) on the rear wheels (12, 14) of the motor vehicle (7);
attaching two measuring units (32, 46), one on each side of the motor vehicle (7), on, in each case, one of the guide rails (4, 6) between the front wheels (8, 10) and the rear wheels (12, 14) of the motor vehicle (7) with respect to the longitudinal extent of the guide rails (4, 6), wherein each of the measuring units (32, 46) has, in each case, two forwardly directed measuring cameras (36, 38, 50, 52), two rearwardly directed measuring cameras (40, 42, 54, 46) and one transverse reference camera (44, 58) which is oriented in the transverse direction of the vehicle and designed to detect optical features on the respectively opposite measuring unit (32, 34) and/or guide rail (4, 6);
determining the position of the measuring units (32, 34) with respect to one another by means of the transverse reference cameras (44, 58);
recording the pair of targets (20, 22) by means of at least one measuring unit (32, 46) and determining the driving axis (64) therefrom;
positioning at least one target (16, 18) in a known position with respect to vehicle surroundings sensor adjustment or calibration element (62);
recording the target (18) positioned on the vehicle surroundings sensor adjustment or calibration element (62), by means of the at least one measuring unit (32, 46), and
determining the angular position of the vehicle surroundings sensor adjustment or calibration element (62) with respect to the driving axis (64);
orienting the vehicle surroundings sensor adjustment or calibration element (62) with respect to the driving axis (64); and
adjusting or calibrating the vehicle surroundings sensor (15) with respect to the driving axis (64).

2. Method according to Claim 1, also comprising the steps of mounting a pair of targets (16, 18) on the front wheels (8, 10) of the motor vehicle (7), of recording the pair of targets (16, 18; 20, 22) on the front wheels (8, 10) and on the rear wheels (12, 14) by means of at least one measuring unit (32, 46), and of determining the driving axis (64) therefrom.

3. Method according to Claim 1 or 2, also comprising the step of determining the distance between the vehicle surroundings sensor adjustment or calibration element (62) and the front axle.

4. Vehicle surroundings sensor adjustment or calibration arrangement, comprising:
two guide rails (4, 6) for receiving a motor vehicle (7); a pair of targets (20, 22) configured to be mounted on the rear wheels (12, 14) of the motor vehicle (7);
a vehicle surroundings sensor (15);
a vehicle surroundings sensor adjustment or calibration element (62) in front of or behind the motor vehicle (7);
at least one receptacle for positioning a target (16, 18) in a known position with respect to the vehicle surroundings sensor adjustment or calibration element (62);
two measuring units (32, 46) for detecting the target (16, 18; 20, 22), wherein each of the measuring units (32, 46) is attached on, in each case, one side of the motor vehicle (7) on one of the guide rails (4, 6) between the front wheels (8, 10) and the rear wheels (12, 14) of the motor vehicle (7) with respect to the longitudinal extent of the guide rails (4, 6), and wherein each of the measuring units (32, 46) has, in each case,
two forwardly directed measuring cameras (36, 38, 50, 52), two rearwardly directed measuring cameras (40, 42, 54, 46) and one transverse reference camera (44, 58) which is oriented in the transverse direction of the vehicle and designed to detect optical features on the respectively opposite measuring unit (32, 34) and/or guide rail (4, 6); and
a data processing unit which is configured to calculate the driving axis (64) of the vehicle (7) from the recorded images of the targets (20, 22); and
to determine the angular position of the vehicle surroundings sensor adjustment or calibration element (62) with respect to the driving axis (64).

5. Vehicle surroundings sensor adjustment or calibration arrangement according to Claim 4, wherein the data processing unit is also configured to adjust or calibrate the vehicle surroundings sensor (15) with respect to the driving axis (64) after the orientation of the vehicle surroundings sensor adjustment or calibration element (62) with respect to the driving axis (64).

6. Vehicle surroundings sensor adjustment or calibration arrangement according to Claim 4 or 5, also comprising a pair of targets (16, 18) on the front wheels (8, 10) and of the motor vehicle (7).

7. Vehicle surroundings sensor adjustment or calibration arrangement according to one of Claims 4 to 6, wherein the data processing unit is also configured to determine the distance of the vehicle surroundings sensor adjustment or calibration element (62) from the front axle.

8. Vehicle surroundings sensor adjustment or calibration arrangement according to one of Claims 4 to 7, wherein the vehicle surroundings sensor adjustment or calibration element (62) is arranged on a frame (60) in front of or behind the vehicle (7).

9. Vehicle surroundings sensor adjustment or calibration arrangement according to Claim 8, wherein the frame (60) has at least one, in particular laterally arranged, receptacle for a target (16, 18).

10. Vehicle surroundings sensor adjustment or calibration arrangement according to one of Claims 4 to 9, wherein the measuring units (32, 46) have a referencing for determining the position of the measuring units (32, 46) with respect to one another.

## Revendications

1. Procédé pour régler ou étalonner un détecteur d'environnement de véhicule (15), comportant les étapes suivantes :
placement d'un véhicule automobile (7) sur les rails de roulement (4, 6) d'un site de mesure ;
application d'au moins une paire de cibles (20, 22) contre les roues arrière (12, 14) du véhicule automobile (7) ;
fixation de deux unités de mesure (32, 46), une sur chaque côté du véhicule automobile (7), contre respectivement un des rails de roulement (4, 6) par rapport à l'extension longitudinale des rails de roulement (4, 6) entre les roues avant (8, 10) et les roues arrière (12, 14) du véhicule automobile (7),
chacune des unités de mesure (32, 46) disposant respectivement de deux caméras de mesure (36, 38, 50, 52) orientées vers l'avant, de deux caméras de mesure (40, 42, 54, 46) orientées vers l'arrière et d'une caméra de référence transversale (44, 58) orientée et réalisée dans la direction transversale du véhicule pour détecter les caractéristiques optiques sur l'unité de mesure (32, 34) respectivement opposée et/ou le rail de roulement (4, 6) ;
détermination de la position des unités de mesure (32, 34) l'une par rapport à l'autre à l'aide des caméras de référence transversale (44, 58) ;
réception de la paire de cibles (20, 22) par au moins une unité de mesure (32, 46) et déduction de l'axe de conduite (64) ;
placement d'au moins une cible (16, 18) dans une position connue par rapport à un élément de réglage ou d'étalonnage de détecteur d'environnement de véhicule (62) ;
réception de la cible (18) placée contre l'élément de réglage ou d'étalonnage de détecteur d'environnement de véhicule (62) par l'au moins une unité de mesure (32, 46) et détermination de la position angulaire de l'élément de réglage ou d'étalonnage de détecteur d'environnement de véhicule (62) par rapport à l'axe de conduite (64) ;
orientation de l'élément de réglage ou d'étalonnage de détecteur d'environnement de véhicule (62) par rapport à l'axe de conduite (64) ; et
réglage ou étalonnage du détecteur d'environnement de véhicule (15) par rapport à l'axe de conduite (64).

2. Procédé selon la revendication 1, comprenant en outre les étapes d'application d'une paire de cibles (16, 18) contre les roues avant (8, 10) du véhicule automobile (7), de réception de la paire de cibles (16, 18 ; 20, 22) contre les roues avant (8, 10) et contre les roues arrière (12, 14) par au moins une unité de mesure (32, 46) et de détermination de l'axe de conduite (64).

3. Procédé selon la revendication 1 ou 2, comprenant en outre l'étape de détermination de la distance de l'élément de réglage ou d'étalonnage de détecteur d'environnement de véhicule (62) par rapport à l'essieu avant.

4. Agencement de réglage ou d'étalonnage de détecteur d'environnement de véhicule, comportant :
deux rails de roulement (4, 6) pour recevoir un véhicule automobile (7) ;
une paire de cibles (20, 22) conçue pour être appliquée contre les roues arrière (12, 14) du véhicule automobile (7) ;
un détecteur d'environnement de véhicule (15) ;
un élément de réglage ou d'étalonnage de détecteur d'environnement de véhicule (62) devant ou derrière le véhicule automobile (7) ;
au moins un logement pour le placement d'une cible (16, 18) dans une position connue par rapport à l'élément de réglage ou d'étalonnage de détecteur d'environnement de véhicule (62) ;
deux unités de mesure (32, 46) pour détecter la cible (16, 18 ; 20, 22), chacune des unités de mesure (32, 46) étant fixée à un des rails de roulement (4, 6) sur respectivement un côté du véhicule automobile (7), par rapport à l'extension longitudinale des rails de roulement (4, 6) entre les roues avant (8, 10) et les roues arrière (12, 14) du véhicule automobile (7), et
chacune des unités de mesure (32, 46) disposant respectivement de deux caméras de mesure (36, 38, 50, 52) orientées vers l'avant, de deux caméras de mesure (40, 42, 54, 46) orientées vers l'arrière et d'une caméra de référence transversale (44, 58) orientée dans la direction transversale du véhicule et réalisée de façon à détecter les caractéristiques optiques sur l'unité de mesure (32, 34) respectivement opposée et/ou le rail de roulement (4, 6) ; et
une unité de traitement de données conçue pour :
représenter l'axe de conduite (64) du véhicule (7) à partir des images prises de la cible (20, 22) ; et
déterminer la position angulaire de l'élément de réglage ou d'étalonnage de détecteur d'environnement de véhicule (62) par rapport à l'axe de conduite (64).

5. Agencement de réglage ou d'étalonnage de détecteur d'environnement de véhicule selon la revendication 4, l'unité de traitement de données étant en outre conçue pour régler ou étalonner le détecteur d'environnement de véhicule (15) par rapport à l'axe de conduite (64) après orientation de l'élément de réglage ou d'étalonnage de détecteur d'environnement de véhicule (62) par rapport à l'axe de conduite (64).

6. Agencement de réglage ou d'étalonnage de détecteur d'environnement de véhicule selon la revendication 4 ou 5, comprenant en outre une paire de cibles (16, 18) contre les roues avant (8, 10) et du véhicule automobile (7).

7. Agencement de réglage ou d'étalonnage de détecteur d'environnement de véhicule selon l'une quelconque des revendications 4 à 6, l'unité de traitement de données étant en outre conçue pour déterminer la distance de l'élément de réglage ou d'étalonnage de détecteur d'environnement de véhicule (62) par rapport à l'essieu avant.

8. Agencement de réglage ou d'étalonnage de détecteur d'environnement de véhicule selon l'une quelconque des revendications 4 à 7, l'élément de réglage ou d'étalonnage de détecteur d'environnement de véhicule (62) étant disposé sur un châssis (60), devant ou derrière le véhicule (7).

9. Agencement de réglage ou d'étalonnage de détecteur d'environnement de véhicule selon la revendication 8, le châssis (60) comportant au moins un logement notamment disposé en côté pour une cible (16, 18).

10. Agencement de réglage ou d'étalonnage de détecteur d'environnement de véhicule selon l'une quelconque des revendications 4 à 9, les unités de mesure (32, 46) disposant d'un référencement pour déterminer la position des unités de mesure (32, 46) l'une par rapport à l'autre.
